# EUROPÄISCHE PATENTSCHRIFT

(11) **EP 1 801 506 B1**
(45) Veröffentlichungstag und Bekanntmachung des Hinweises auf die Patenterteilung: **21.04.2010**
(21) Anmeldenummer: 06018813.3
(22) Anmeldetag: 08.09.2006
(51) Int. Cl.: F24D 3/10

(54) **Kaskadeneinheit für eine Heizungsanlage mit zwei oder mehr Heizkesseln**
Cascaded arrangement for a heating installation with two or more boilers
Ensemble en cascade pour installation de chauffage avec deux chaudières ou plus

(30) Priorität: 23.12.2005 DE 202005020098 U
(43) Veröffentlichungstag der Anmeldung: 27.06.2007
(73) Patentinhaber: Comfort-Sinusverteiler GmbH, 48493 Wettringen (DE)
(72) Erfinder: Mukomilow, Dariusz, 01662 Meissen (DE)
(74) Vertreter: Linnemann, Winfried

(56) Entgegenhaltungen:
- EP-A2- 1 036 993
- EP-A2- 1 338 853
- DE-C1- 19 840 054
- DE-U1- 20 211 303
- DE-U1- 20 216 526
- DE-U1- 29 914 303

## Beschreibung

Die vorliegende Erfindung betrifft eine Kaskadeneinheit für eine Heizungsanlage mit zwei oder mehr Heizkesseln, insbesondere Brennwertkesseln, mit einer hydraulischen Weiche, die einerseits mit den Vorläufen und Rückläufen aller Heizkessel und andererseits mit mindestens je einem Heizkreisvorlauf und Heizkreisrücklauf verbunden ist, wobei die Kaskadeneinheit weiterhin je einen im wesentlichen horizontal verlaufenden Kesselvorlauf-Sammler und Kesselrücklauf-Verteiler umfaßt, wobei der Sammler und der Verteiler mit der hydraulischen Weiche verbunden sind und wobei der Sammler und der Verteiler jeweils mit vorbereiteten, für eine Gruppe aus zwei oder mehr Heizkesseln angepaßt plazierten Anschlußstutzen zum Anschluß der Heizkesselvorläufe und der Heizkesselrückläufe ausgeführt sind.

Eine Kaskadeneinheit der vorstehend genannten Art ist aus DE 202 11 303 U1 bekannt. Diese bekannte Kaskadeneinheit kann mit auf einem Boden aufstellbaren Füßen und/oder mit an einer Wand oder Decke anbringbaren Trägern ausgestattet sein. Mittels dieser Füße oder Träger kann die Kaskadeneinheit für sich ausreichend standsicher montiert werden, jedoch ist diese bekannte Kaskadeneinheit nicht in der Lage, die zugehörigen Kessel zu tragen, weil die Kessel einerseits und die Kaskadeneinheit andererseits hier nur über die Kesselvorlaufanschlüsse und Kesselrücklaufanschlüsse miteinander verbunden sind. Die Kesselvorlaufanschlüsse und Kesselrücklaufanschlüsse sind jedoch für die Aufnahme des hohen Gewichts der Kessel nicht geeignet. Es ist deshalb bisher erforderlich, die Kessel für sich zu montieren, wobei üblicherweise bei modernen Kesseln eine hängende Anbringung an einer Wand oder einer Decke eines Heizungsraums erfolgt. Üblicherweise werden dazu zunächst an der Wand oder Decke Rahmen oder Träger angebracht, an denen dann die Kessel hängend montiert werden.

Als nachteilig wird bei diesem bekannten Stand der Technik angesehen, daß bei der Heizungsinstallation ein hoher Montageaufwand vor Ort im Heizungsraum erforderlich ist und daß außerdem ein sehr genaues Arbeiten unabdingbar ist, damit die an der Wand oder Decke angebrachten Heizkessel einerseits und die mit ihren eigenen Füßen oder Trägern ebenfalls im Heizungsraum angebrachte Kaskadeneinheit richtig zueinander positioniert werden. Erfahrungsgemäß liegt hier eine Fehlerquelle, die dazu führt, daß häufig aufwendige Anpassungsarbeiten oder Änderungsarbeiten nötig werden, wenn die Kaskadeneinheit mit den Kesseln hydraulisch verbunden wird.

Für die vorliegende Erfindung stellt sich deshalb die Aufgabe, eine Kaskadeneinheit der eingangs genannte Art zu schaffen, die die dargelegten Nachteile vermeidet und mit der insbesondere eine deutliche Verminderung des Montageaufwands bei der Installation einer Heizungsanlage erreicht wird und die eine weitgehende und dadurch Kosten einsparende Vorfertigung sowie einen problemlosen Transport ermöglicht.

Die Lösung dieser Aufgabe gelingt erfindungsgemäß mit einer Kaskadeneinheit der eingangs genannten Art, die dadurch gekennzeichnet ist, daß sie mindestens einen selbsttragenden Tragrahmen bildet, an dem mindestens einer der Heizkessel anbringbar ist.

Bei der erfindungsgemäßen Kaskadeneinheit bildet vorteilhaft diese Kaskadeneinheit selbst einen zur Anbringung eines oder mehrerer Heizkessel dienenden Tragrahmen, wodurch ein separates Anbringen der Heizkessel an einer Wand oder Decke des Heizungsraums nicht mehr erforderlich ist. Weiterhin bietet die erfindungsgemäße Kaskadeneinheit den Vorteil, daß die zugehörigen Kessel bereits montiert und zusammen mit der Kaskadeneinheit vorgefertigt werden können und anschließend zum Installationsort der Heizungsanlage transportiert werden können. Damit ist eine Vorfertigung in einem sauberen, ausreichend Platz und alle erforderlichen Hilfsmittel bietenden Fabrikationsgebäude möglich. Vor Ort im Heizungsraum der Heizungsanlage muß dann die Kaskadeneinheit einschließlich der Kessel nur noch an sehr wenigen Punkten mit einem Heizungsnetz, einer Brennstoffzuleitung, einer Abgasleitung und mit elektrischen Leitungen verbunden werden, was den Installationsaufwand am Installationsort vorteilhaft sehr niedrig hält und Installationsfehler weitestgehend ausschließt.

Um innerhalb der Kaskadeneinheit mit einem Bauteil jeweils mehrere Funktionen erfüllen zu können, sind bevorzugt der Sammler und der Verteiler tragende Elemente des selbsttragenden Tragrahmens.

In weiterer Ausgestaltung ist bevorzugt vorgesehen, daß der Sammler und der Verteiler in einer vertikalen Ebene mit Abstand zueinander angeordnet sind und daß zwischen dem Sammler und dem Verteiler vertikale Rohrabschnitte angeordnet sind, wobei die Rohrabschnitte entweder mit dem Sammler oder mit dem Verteiler hydraulisch verbunden und zumindest über Teilstrecken ihrer Länge wasserführend sind und die Anschlußstutzen zum Anschluß der Heizkesselvorläufe und der Heizkesselrückläufe aufweisen. Diese Ausführung der Kaskadeneinheit bietet eine Bauform mit relativ großer Höhe und relativ geringer Tiefe.

In einer dazu alternativen Ausführung ist vorgesehen, daß der Sammler und der Verteiler in einer horizontalen Ebene mit Abstand zueinander angeordnet sind und daß zwischen dem Sammler und dem Verteiler horizontale Rohrabschnitte angeordnet sind, wobei die Rohrabschnitte entweder mit dem Sammler oder mit dem Verteiler hydraulisch verbunden und zumindest über Teilstrecken ihrer Länge wasserführend sind und die Anschlußstutzen zum Anschluß der Heizkesselvorläufe und der Heizkesselrückläufe aufweisen oder tragen. Diese Ausführung der Kaskadeneinheit bietet eine Bauform mit relativ geringer Höhe und größerer Tiefe. In beiden vorstehend angegebenen Ausführungen wird ein besonders hoher Integrationsgrad verschiedener Funktionen mit wenigen Einzelteilen erreicht, was sowohl herstellungstechnisch als auch im Hinblick auf den Materialaufwand und die Herstellungskosten sehr günstig ist.

Weiterhin ist bevorzugt vorgesehen, daß der Sammler, der Verteiler und die vertikalen oder horizontalen Rohrabschnitte als hydraulisch und statisch ausreichend bemessene Rund- oder Rechteckrohre aus Stahl ausgeführt sind.
In der hier angegebenen Ausgestaltung können der Sammler, der Verteiler und die vertikalen oder horizontalen Rohrabschnitte mit hoher Festigkeit und Tragfähigkeit ausgeführt und zudem problemlos miteinander verschweißt werden, ohne daß besonders hohe Materialkosten anfallen oder eine besonders schwierige Bearbeitung erforderlich wird.

Um die einen Teil der Kaskadeneinheit bildende hydraulische Weiche möglichst günstig und ohne Umwege mit dem Sammler und dem Verteiler hydraulisch koppeln zu können, wird vorgeschlagen, daß der Sammler und der Verteiler jeweils an ihrem einen seitlichen Stirnende mit der im wesentlichen vertikal ausgerichteten hydraulischen Weiche verbunden sind, wobei der Sammler oben und der Verteiler unten an die Weiche anschließt.

Eine Weiterbildung der Kaskadeneinheit sieht vor, daß die hydraulische Weiche fest mit dem Sammler und dem Verteiler verbunden ist und ein tragendes Element des selbsttragenden Tragrahmens bildet. In dieser Ausführung übernimmt auch die hydraulische Weiche eine tragende Funktion innerhalb des Tragrahmens. Zweckmäßig besteht die hydraulische Weiche hier aus einem Gehäuse aus Stahl, vorzugsweise mit einem rechteckigen Querschnitt, so daß auch hier eine feste und haltbare Schweißverbindung des Sammlers und des Verteilers mit dem Gehäuse der hydraulischen Weiche problemlos möglich ist.

Alternativ kann die hydraulische Weiche lösbar mit dem Sammler und dem Verteiler verbunden sein und ein nichttragendes Element oder ein tragendes Element des selbsttragenden Tragrahmens bilden. Diese Ausführung der Kaskadeneinheit ist insbesondere dann zweckmäßig, wenn sie in verschiedenen Anwendungen einmal mit hydraulischer Weiche und einmal ohne hydraulische Weiche eingesetzt werden soll.

Um die erfindungsgemäße Kaskadeneinheit möglichst einfach an unterschiedliche Bedürfnisse hinsichtlich der Heizleistung anpassen zu können, schlägt eine Ausgestaltung der Erfindung vor, daß die Kaskadeneinheit mehrere selbsttragende Tragrahmen umfaßt, die jeweils im Bereich der Stirnenden des Sammlers und des Verteilers miteinander mechanisch und hydraulisch lösbar verbunden sind. In dieser Ausgestaltung der Kaskadeneinheit bilden die Tragrahmen ein Modulsystem, wobei mit einem oder mehreren Grundtypen des Tragrahmens unterschiedlich große Kaskadeneinheiten mit unterschiedlichen Zahlen von Heizkesseln schnell und einfach realisierbar sind. Durch die Verbindung der jeweils aneinanderstoßenden Stirnenden der Sammler und Verteiler von jeweils zwei benachbarten Tragrahmen werden diese in einem Arbeitsgang sowohl mechanisch als auch hydraulisch miteinander verbunden, was den Montageaufwand vorteilhaft niedrig hält.

Um einen freizügigen Einsatz der Kaskadeneinheit zu gewährleisten, sind zweckmäßig der Sammler und der Verteiler jeweils an einem oder an beiden Stirnenden mit je einem genormten Verbindungsmittel, vorzugsweise Verbindungsflansch, ausgebildet.

Eine weitere Maßnahme, die dazu dient, den Montageaufwand niedrig zu halten, besteht darin, daß vorzugsweise der/ jeder Tragrahmen vorbereitete, an die zu halternden Kessel angepaßte Kesselhalteelemente aufweist. Hiermit besteht die Möglichkeit, durch einen einfachen Austausch der Kesselhalteelemente die Kaskadeneinheit an unterschiedlich große Heizkessel oder an Kessel verschiedener Hersteller anzupassen.

Da eine Heizungsanlage neben den Heizkesseln, dem Vorlauf und Rücklauf und der hydraulischen Weiche noch weitere Komponenten umfaßt, schlägt eine weitere Ausgestaltung der Kaskadeneinheit vor, daß der Tragrahmen Halteelemente und/oder Anschlüsse für weitere Komponenten der Kaskadeneinheit, insbesondere für Ausdehnungsgefäße, Entlüftungsarmaturen, Fühler, Regelgeräte und andere Armaturen und/oder Funktionselemente, aufweist.

Ein weiterer Schritt in Richtung einer möglichst weitgehenden Vorfertigung der Kaskadeneinheit besteht darin, daß an dem Tragrahmen ein Leitungsabschnitt mit passend positionierten Abzweigen zu allen gehalterten Kesseln zum Zuführen von gasförmigem oder flüssigem Brennstoff angeordnet ist. Vorteilhaft muß bei dieser Ausführung der Kaskadeneinheit der Leitungsabschnitt für den Brennstoff nur noch an einer einzigen Schnittstelle mit einem den Brennstoff in den Heizungsraum führenden Leitungsabschnitt verbunden werden; alle weiteren Verbindungen und Abzweigungen innerhalb der Kaskadeneinheit für die Verteilung des Brennstoffs auf die Kessel können schon vorab hergestellt und auf ihre Dichtigkeit geprüft werden.

Mit der gleichen Zielsetzung wird vorgeschlagen, daß an dem Tragrahmen je ein Leitungsabschnitt mit passend positionierten Leitungszweigen von allen gehalterten Kesseln zum Sammeln und Abführen von Abgasen und/oder zum Sammeln und Abführen von Kondensat angeordnet ist.

Um die Kaskadeneinheit vor ihrer endgültigen Montage möglichst einfach transportieren und bewegen zu können, können am Tragrahmen unterseitig mehrere Laufrollen angebracht sein. Mit diesen Laufrollen kann die Kaskadeneinheit allein durch Muskelkraft bewegt werden, was in vielen Anwendungsfällen den aufwendigen Einsatz von Hub- oder Transportgeräten erübrigt.

Da nach der endgültigen Montage der Kaskadeneinheit im Heizungsraum die Laufrollen nicht mehr weiter benötigt werden, schlägt eine Ausgestaltung vor, daß die Laufrollen lösbar am Tragrahmen angebracht und durch Stand- oder Wandkonsolen ersetzbar sind.

In einer weiteren, vorteilhaften Ausgestaltung wird vorgeschlagen, daß der Sammler und Verteiler in einer horizontalen Ebene mit Abstand zueinander angeordnet sind und daß von dem Sammler und dem Verteiler Rohrabschnitte vertikal zum Kessel verlaufen, wobei die Rohrabschnitte mit dem jeweils zugeordneten Sammler oder Verteiler mechanisch und hydraulisch verbunden sind und wobei die Rohrabschnitte Anschlußstutzen zum Anschluß an den Kessel aufweisen. Bei dieser vorteilhaften Ausgestaltung ist die hydraulische Weiche bevorzugt mit dem Verteiler hydraulisch und mechanisch verbunden.

Zur Verbindung des Sammlers mit der hydraulischen Weiche ist daher vorteilhaft ein Bypass vorgesehen, der einen horizontalen Leitungsabschnitt und einen vertikalen Leitungsabschnitt aufweist. Der Bypass erstreckt sich dabei mit seinem horizontalen Leitungsabschnitt von dem Sammler in Richtung zum Verteiler und geht in den vertikalen Leitungsabschnitt über, der an einem oberen Ende der hydraulischen Weiche mit dieser verbunden ist, so daß der Sammler hydraulisch mit der hydraulischen Weiche verbunden ist.

Weitere vorteilhafte Ausgestaltungen der Erfindung sind in den Unteransprüchen und der folgenden Figurenbeschreibung offenbart. Es zeigen:
- Figur 1: eine Kaskadeneinheit in einer ersten Ausführung in einer Frontansicht,
- Figur 2: die Kaskadeneinheit aus Figur 1 in einer Seitenansicht,
- Figur 3: die Kaskadeneinheit in einer zweiten Ausführung in Frontalansicht,
- Figur 4: die Kaskadeneinheit aus Figur 3 in Draufsicht,
- Figur 5: die Kaskadeneinheit aus Figur 3 und Figur 4 in Seitenansicht,
- Figur 6: die Kaskadeneinheit in einer weiteren, modularen Ausführung in Frontansicht, vor dem Zusammenbau,
- Figur 7: die modulare Kaskadeneinheit aus Figur 6 in Frontansicht, im zusammengebauten Zustand,
- Figur 8: die Kaskadeneinheit in einer weiteren Ausführung in einer Frontansicht,
- Figur 9: die Kaskadeneinheit aus Figur 8 in einer Draufsicht,
- Figur 10: die Kaskadeneinheit aus den Figuren 8 und 9 in einer Seitenansicht,
- Figur 11: die Kaskadeneinheit aus Figur 8 in Frontansicht ohne Kessel,
- Figur 12: die Kaskadeneinheit aus Figur 11 in Draufsicht,
- Figur 13: die Kaskadeneinheit aus den Figuren 11 und 12 in einer Seitenansicht,
- Figur 14: die Kaskadeneinheit aus Figur 8 als Ausschnitt mit der hydraulischen Weiche als Einzelheit in einer Frontansicht, und
- Figur 15: die Kaskadeneinheit aus Figur 8 in einer Seitenansicht.

In den unterschiedlichen Figuren sind gleiche Teile stets mit denselben Bezugszeichen versehen, weswegen diese in der Regel auch nur einmal beschrieben werden.

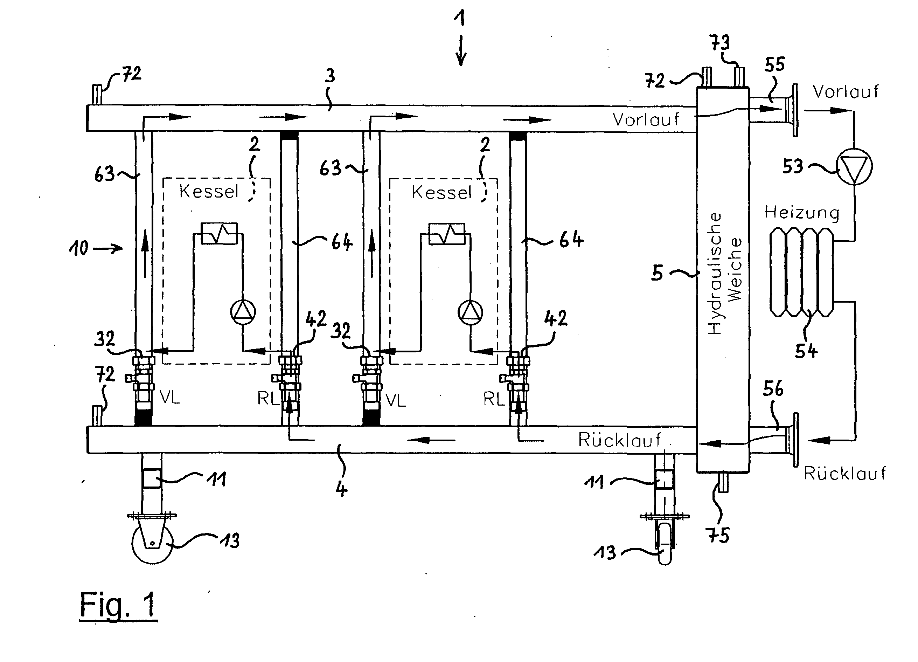

Bei dem Beispiel der Kaskadeneinheit 1 gemäß Figur 1 ist diese für die Aufnahme von zwei Heizkesseln 2 ausgelegt. Dabei umfaßt die Kaskadeneinheit 1 oben einen horizontal verlaufenden Kesselvorlauf-Sammler 3 und im vertikalen Abstand darunter einen ebenfalls horizontal verlaufenden Kesselrücklauf-Verteiler 4. In Vertikalrichtung sind der Sammler 3 und der Verteiler 4 durch vertikale Rohrabschnitte 63 und 64 mechanisch miteinander verbunden. Dabei ist abwechselnd jeweils ein vertikaler Rohrabschnitt 63 mit dem Sammler 3 und ein Rohrabschnitt 64 mit dem Verteiler 4 hydraulisch verbunden. Dies bedeutet, daß jeweils die Rohrabschnitte 63 an ihrem unteren Ende flüssigkeitsdicht sind und hier nur mechanisch, nicht jedoch hydraulisch mit dem Verteiler 4 verbunden sind. Entsprechend sind die vertikalen Rohrabschnitte 64 jeweils an ihrem oberen Ende nur mechanisch, jedoch nicht hydraulisch mit dem Sammler 3 verbunden.

Aufgrund des vertikalen Abstandes von Sammler 3 und Verteiler 4 ist es dabei unerlässlich, dass die Strömungsverbindung dazwischen, die über den zugeordneten Heizkessel verläuft, über vertikale Rohrabschnitte zur Überwindung des Abstandes verfügt, wobei die Lage der Anschlüsse des Heizkessels selbstverständlich maßgebend für die Rohrführung der Rohrabschnitte 63, 64 ist.

An ihrem in Figur 1 rechten Stirnende sind der Sammler 3 und der Verteiler 4 mit einer vertikal ausgerichteten hydraulischen Weiche 5 sowohl mechanisch als auch hydraulisch verbunden. An ihrer dem Vorlauf 3 und dem Verteiler 4 abgewandten, in Figur 1 nach rechts weisenden Seite besitzt die hydraulische Weiche 5 oben einen Heizkreisvorlaufanschluß 55 und unten einen Heizkreisrücklaufanschluß 56. An diese Anschlüsse 55, 56 kann ein Heizkreis angeschlossen werden, der hier rein schematisch mit einer symbolisch dargestellten Pumpe 53 und einer ebenfalls symbolisch dargestellten Heizung 54 zusammengefaßt ist.

Der Sammler 3, der Verteiler 4, die vertikalen Rohrabschnitte 63 und 64 und die hydraulische Weiche 5 bilden hier einen stabilen, selbsttragenden Tragrahmen 10, der in der Lage ist, die Heizkessel 2 zu tragen, ohne daß die Heizkessel 2 über sonstige Befestigungselemente an einer Wand oder einem sonstigen Gebäudeteil oder an separaten Trägern gehalten werden müssen.

Die Zuführung des durch die Kaskadeneinheit 1 und den Heizkreis strömenden, als Wärmetransportmedium dienenden Wassers zu den einzelnen Kesseln 2 und die Abführung des erhitzten Wassers von den Kesseln 2 in den Heizkreis erfolgt hier über Anschlußstutzen 32 bzw. 42. Dabei ist jeweils ein Anschlußstutzen 32 jedem vertikalen Rohrabschnitt 63 und jeweils ein Anschlußstutzen 42 jedem vertikalen Rohrabschnitt 64 sowohl mechanisch als auch hydraulisch verbunden zugeordnet. Um das Gewicht der Heizkessel 2 aufzunehmen, verfügt der Tragrahmen 10 über hier nicht dargestellte Kesselhalteelemente, die an die Größe und Bauart des jeweils zu halternden Kessels 2 angepaßt ausgebildet und innerhalb des Tragrahmens 10 positioniert sind.

Unterhalb des Verteilers 4 sind zwei Querträger 11 angeordnet, die unterseitig insgesamt vier Laufrollen 13 tragen. Mittels dieser Laufrollen 13 kann die komplette Kaskadeneinheit 1 einschließlich der Kessel 2 ohne den Einsatz von Hub- oder Transportgeräten durch Muskelkraft rollend bewegt werden. Nach dem Verbringen der Kaskadeneinheit 1 an ihren Aufstellungsort können die Laufrollen 13 von dem Tragrahmen 10 getrennt und durch feste Boden- oder Wandkonsolen ersetzt werden.

Zusätzlich umfaßt die Kaskadeneinheit 1 in dem in Figur 1 dargestellten Beispiel noch mehrere Entlüftungsarmaturen 72, um den Sammler 3, den Verteiler 4 und die hydraulische Weiche 5 automatisch oder manuell entlüften zu können. Auf der Oberseite der hydraulischen Weiche 5 ist ein Fühler 73 angeordnet, beispielsweise ein in einer Tauchhülse angeordnetes Thermometer. Am unteren Ende der hydraulischen Weiche 5 ist schließlich am tiefsten von Wasser durchströmten Teil der Kaskadeneinheit 1 noch ein Entleerungsstutzen 75 angebracht, durch den bei Bedarf die Kaskadeneinheit 1 entleert werden kann. Außerdem kann der Stutzen 75 zum Abziehen von Schlamm genutzt werden, der sich im unteren Teil der hydraulischen Weiche 5 absetzt.

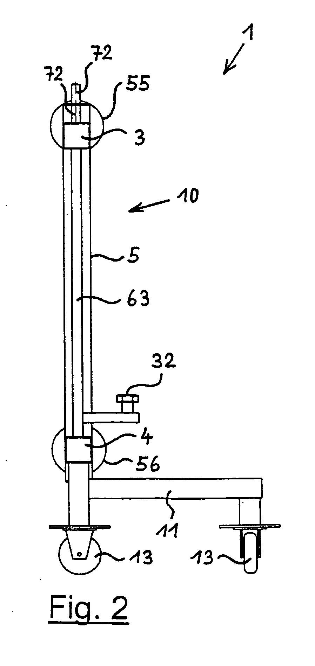

Figur 2 zeigt die Kaskadeneinheit 1 aus Figur 1 nun in einer Seitenansicht auf die in Figur 1 linke Seite. Hier wird die kompakte Konstruktion der Kaskadeneinheit 1 und des Tragrahmens 10 besonders deutlich, wobei in Figur 2 die Heizkessel 2 nicht eingezeichnet sind.

In Figur 2 sind dem Betrachter die Stirnseiten des Kesselvorlauf-Sammlers 3 und des Kesselrücklauf-Verteilers 4 zugewandt. Zwischen diesen verläuft vertikal der Rohrabschnitt 63; weitere Rohrabschnitte 63 und 64 (vergleiche Figur 1) liegen verdeckt dahinter. Ganz hinten liegt in Figur 2 die hydraulische Weiche 5, die eine größere Tiefe aufweist als die vertikalen Rohrabschnitte 63 und 64.

Vom unteren Bereich des sichtbaren vertikalen Rohrabschnitts 63 geht der Anschlußstutzen 32 nach vorne und oben ab, durch den das zu erhitzende Wasser dem Heizkessel zuführbar ist. Die weiteren Anschlußstutzen 32 und die Anschlußstutzen 42 (vergleiche Figur 1) liegen in Figur 2 verdeckt dahinter.

Hinter der hydraulischen Weiche 5 liegt oben der Heizkreisvorlaufanschluß 55 und unten der Heizkreisrücklaufanschluß 56, jeweils in Form eines runden Verbindungsflansches.

Im unteren Bereich des Tragrahmens 10 verläuft horizontal einer der Querträger 11; der zweite Querträger 11 liegt verdeckt dahinter. Unterseitig sind an den Querträgern 11 die Laufrollen 13 angebracht, von denen in Figur 2 zwei Stück sichtbar sind.

Ganz oben in Figur 2 sind noch die beiden Entlüftungsarmaturen 72 sichtbar, die auf der Oberseite des Sammlers 3 und auf der Oberseite der hydraulischen Weiche 5 sitzen.

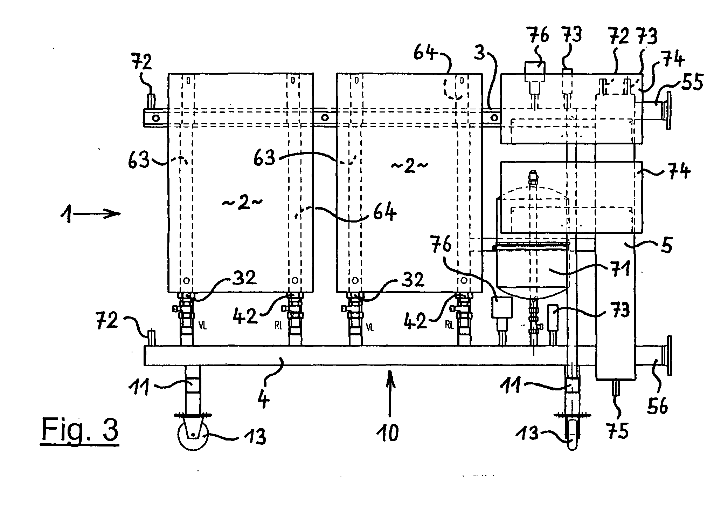

Figur 3 zeigt ein Beispiel der Kaskadeneinheit 1, bei der an dem Tragrahmen 10 neben zwei Heizkesseln 2 weitere Komponenten einer Heizungsanlage angebracht sind.

Der selbsttragende Tragrahmen 10 wird auch hier durch den oben horizontal verlaufenden Kesselvorlauf-Sammler 3, den parallel dazu unten horizontal verlaufenden Kesselrücklauf-Verteiler 4, die dazwischen angeordneten, vertikal verlaufenden Rohrabschnitte 63 und 64 und die hydraulische Weiche 5 gebildet. Zur Erzielung einer stabilen Konstruktion sind die genannten Teile zweckmäßig Rechteckprofile oder -rohre aus Stahl und miteinander verschweißt.

Die beiden Heizkessel 2 sind über jeweils einen der Anschlußstutzen 32 mit dem Sammler 3 und einen der Anschlußstutzen 42 mit dem Verteiler 4 hydraulisch verbunden. Der größte Teil der vertikalen Rohrabschnitte 63 und 64 liegt hier jeweils verdeckt hinter den beiden Heizkesseln 2.

Rechts neben dem in Figur 3 rechten Kessel 2 sind oben am Tragrahmen 10 übereinander zwei Regelgeräte 74 gehaltert, wobei jeweils ein Regelgerät 74 einem der Heizkessel 2 zugeordnet ist. Hinter dem unteren Regelgerät 74 liegt, teilweise durch dieses verdeckt, ein Ausdehnungsgefäß 71, das mit dem Verteiler 4 hydraulisch verbunden ist. Weitere Komponenten, die hier einen Teil der Kaskadeneinheit 1 bilden, sind mehrere Entlüftungsarmaturen 72 auf dem Sammler 3, dem Verteiler 4 und der hydraulischen Weiche 5, ein Fühler 73 an der Oberseite der hydraulischen Weiche 5 und ein Entleerungsstutzen 75 an der Unterseite der hydraulischen Weiche 5. Außerdem ist hier noch am Sammler 3 und am Verteiler 4 jeweils ein Druckschalter 76 angebracht.

An der in Figur 3 rechten Seite besitzt die hydraulische Weiche 5 wieder oben den Heizkreisvorlaufanschluß 55 und unten den Heizkreisrücklaufanschluß 56 zur Verbindung der Kaskadeneinheit 1 mit einem Heizkreis.

Im unteren Teil des Tragrahmens 10 sind unterhalb des Verteilers 4 wieder zwei Querträger 11 vorgesehen, die unterseitig insgesamt vier Laufrollen 13 tragen. Auch hier ist die komplette Kaskadeneinheit 1 mittels der Laufrollen 13 ohne Hub- und Transportgerät bewegbar, um sie an einen Aufstellungsort zu transportieren.

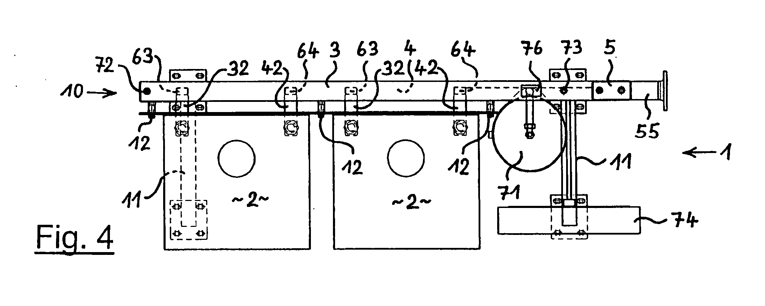

Figur 4 zeigt die Kaskadeneinheit 1 aus Figur 3 in Draufsicht. Oben in Figur 4 liegen nun der Sammler 3 und darunter verdeckt der Verteiler 4, die durch die hier ebenfalls verdeckten und deshalb gestrichelt dargestellten vertikalen Rohrabschnitte 63 und 64 miteinander verbunden sind.

Unten in Figur 4 sind die beiden Kessel 2 in Draufsicht erkennbar, die jeweils über die Anschlußstutzen 32 und 42 mit dem Sammler 3 und dem Verteiler 4 hydraulisch verbunden sind. Außerdem sind die Kessel 2 über die Kesselhalteelemente 12 mechanisch mit dem Tragrahmen 10 verbunden. Auf diese Weise übernimmt der Tragrahmen 10 die gesamte Last, die die Heizkessel 2 darstellen, so daß auch hier die Heizkessel 2 ausschließlich am Tragrahmen 10 hängend gehalten werden.

Rechts neben dem in Figur 4 rechten Heizkessel 2 ist das Ausdehnungsgefäß 71 angeordnet. Davor sind die Regelgeräte 74 für eine Bedienungsperson gut zugänglich plaziert.

Ganz in Hintergrund der Figur 4 liegen nun die unteren Querträger 11 mit den hier nicht sichtbaren Laufrollen.

Die hydraulische Weiche 5 ist rechts oben in Figur 4 im Anschluß an das hier rechte Stirnende des Sammlers 3 und des Verteilers 4 in Draufsicht erkennbar. Nach rechts hin erstreckt sich von der hydraulischen Weiche 5 der Heizkreisvorlaufanschluß 55; darunter liegt verdeckt der Heizkreisrücklaufanschluß.

Ganz links ist auf der Oberseite des Sammlers 3 die Entlüftungsarmatur 72 sichtbar. Auf der Oberseite des Sammlers 3 sitzt an dessen rechtem Endbereich der Fühler 73. Links daneben ist der Druckschalter 76 angeordnet.

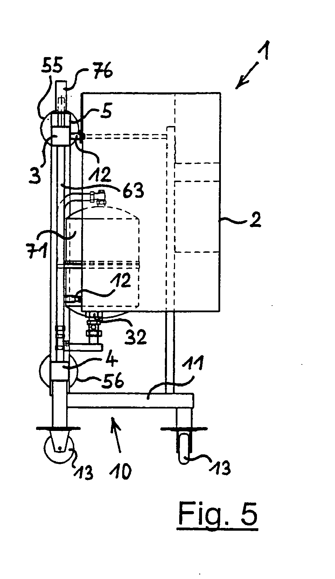

Figur 5 zeigt die Kaskadeneinheit 1 aus den Figuren 3 und 4 in Seitenansicht auf die linke Seite. Links in Figur 5 sind oben der Sammler 3 und unten der Verteiler 4 in Stirnansicht sichtbar. Vertikal verbunden sind der Sammler 3 und der Verteiler 4 über die im Hintergrund liegende hydraulische Weiche 5 und die vertikalen Rohrabschnitte, von denen hier nur der vordere Rohrabschnitt 63 sichtbar ist.

Von dem sichtbaren Rohrabschnitt 63 geht nach vorne und oben der Anschlußstutzen 32 ab, der mit dem zugehörigen Kessel 2 verbunden ist. Der weitere Anschlußstutzen 32 und die weiteren, mit dem Verteiler hydraulisch verbundenen Anschlußstutzen 42 (vergleiche Figur 3 und Figur 4) sind in Figur 5 verdeckt und deshalb nicht sichtbar.

Hinter dem in Figur 5 sichtbaren Heizkessel 2 liegt der zweite Heizkessel 2; dahinter wiederum liegt das Ausdehnungsgefäß 71.

Unten in Figur 5 ist wieder der eine der beiden Querträger 11 mit zwei der Laufrollen 13 sichtbar.

Links im Hintergrund der Figur 5 sind schließlich noch der Heizkreisvorlaufanschluß 55 und der Heizkreisrücklaufanschluß 56 in Form der runden Anschlußflansche teilweise erkennbar.

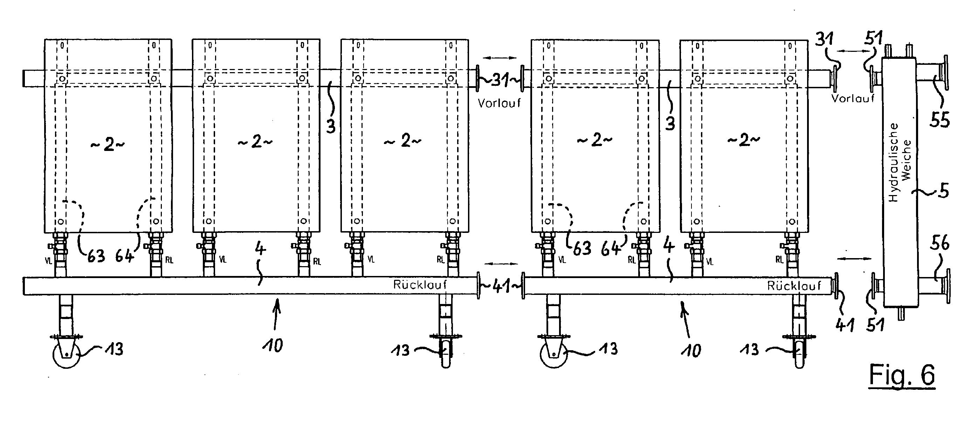

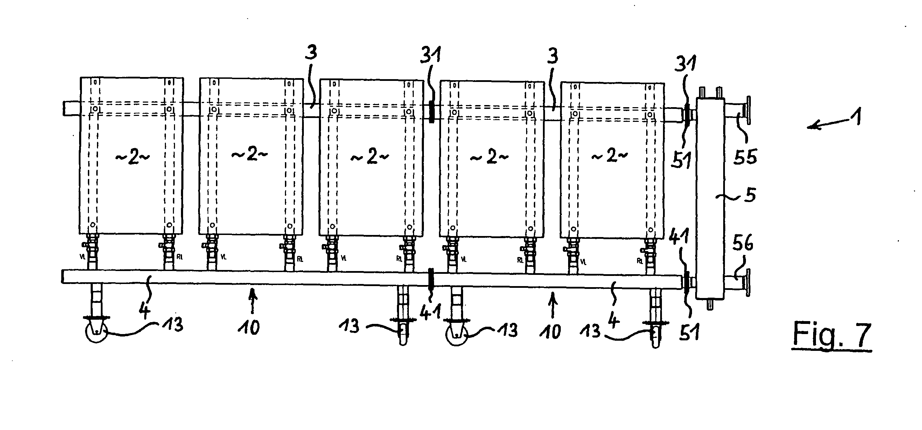

Die Figuren 6 und 7 zeigen eine modular aufgebaute Kaskadeneinheit 1. In Figur 6 sind die beiden Tragrahmen 10 und die zugehörige hydraulische Weiche 5 noch als nicht verbundene Komponenten gezeigt. Dies erlaubt einen getrennten Transport, wodurch die einzelnen Tragrahmen 10 noch gut transportierbar und handhabbar bleiben, wenn eine große Heizungsanlage mit mehr als zwei oder drei Heizkesseln 2 zu installieren ist. Am Aufstellungsort werden die beiden (oder auch mehr) Tragrahmen 10 und die hydraulische Weiche 5 sowohl mechanisch als auch hydraulisch miteinander gekoppelt, wodurch dann die Figur 7 sichtbare, fertige Kaskadeneinheit 1 entsteht.

Auch bei dem Beispiel nach den Figuren 6 und 7 wird der Tragrahmen 10 jeweils durch einen Kesselvorlauf-Sammler 3, einen Kesselrücklauf-Verteiler 4 und mehrere Paare von vertikalen Rohrabschnitten 63 und 64 gebildet. Im hier gezeigten Beispiel besitzt der jeweils links dargestellte Tragrahmen 10 drei Paare von vertikalen Rohrabschnitten 63 und 64 und ist damit für die Aufnahme von drei Heizkesseln 2 ausgelegt. Der jeweils rechts dargestellte Tragrahmen 10 besitzt zwei Paare von vertikalen Rohrabschnitten 63 und 64 und ist damit zur Aufnahme von zwei Heizkesseln 2 ausgelegt.

Der Vorlauf 3 und der Rücklauf 4 des linken Tragrahmens besitzen jeweils an ihrer rechten Stirnseite je einen Verbindungsflansch 31 bzw. 41. Mit passenden, identischen Flanschen 31 bzw. 41 sind bei dem rechten Tragrahmen 10 sowohl der Sammler 3 als auch der Verteiler 4 an ihren beiden Stirnseiten ausgestattet. Die hydraulische Weiche 5 besitzt an ihrer dem rechten Tragrahmen 10 zugewandten linken Seite im passenden Abstand zwei Verbindungsflansche 51, die mit den rechten Verbindungsflanschen 31 bzw. 41 des rechten Tragrahmens 10 verbindbar sind.

Allein über die Verbindungsflansche 31, 41 und 51 werden die beiden Tragrahmen 10 und die hydraulische Weiche 5 sowohl ausreichend stabil mechanisch als auch flüssigkeitsdicht hydraulisch miteinander verbunden. Den fertig verbundenen Zustand gibt die Figur 7 wieder. Sämtliche Kessel 2 werden auch hier von den integriert ausgebildeten Tragrahmen 10 getragen.

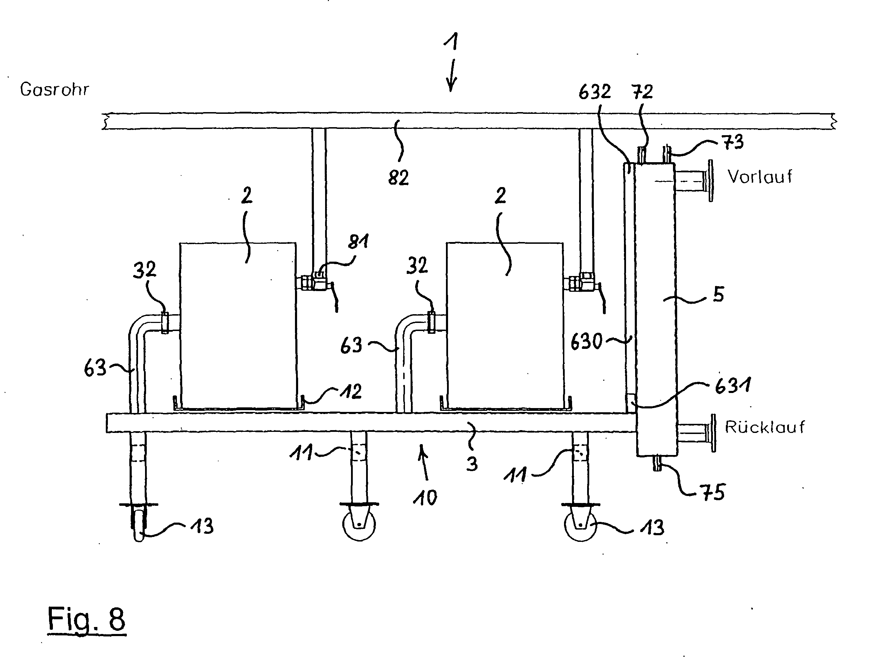

In den Figuren 8 bis 15 ist ein weiteres Ausführungsbeispiel der Kaskadeneinheit 1 dargestellt. Im Unterschied zu den Figuren 1 bis 7 weist die Ausführungsform nach den Figuren 8 bis 15 zueinander horizontal beabstandete Kesselvorlauf-Sammler 3 und Kesselrücklauf-Verteiler 4 auf.
Der Kesselvorlauf-Sammler 3 und der Kesselrücklauf-Verteiler 4 verlaufen jeweils, wie zuvor, in Horizontalrichtung. Die Kessel 2 stehen auf dem Sammler 3 und dem Verteiler 4, worauf weiter unten näher eingegangen wird.

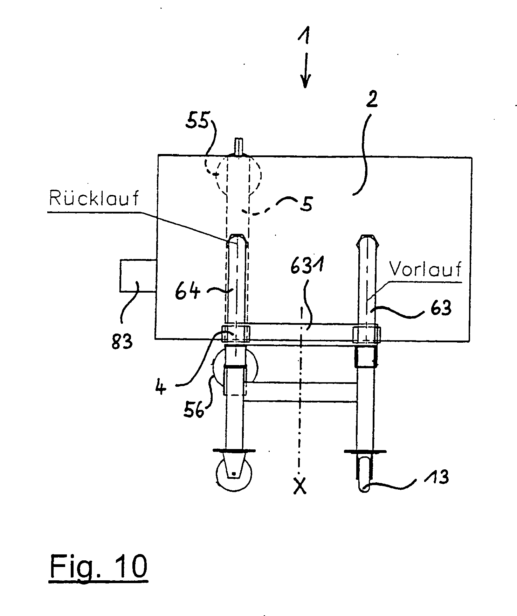

Entsprechend den Ausführungsbeispielen gemäß Fig. 8 bis 15 ist, zugeordnet zu einem Heizkessel 2, jeweils ein Rohrabschnitt 63 mit dem Sammler 3 und ein Rohrabschnitt 64 mit dem Verteiler 4 hydraulisch verbunden. Aufgrund des horizontalen Abstandes von Sammler 3 und Verteiler 4 ist es dabei unerlässlich, dass die Strömungsverbindung dazwischen, die über den zugeordneten Heizkessel 2 verläuft, über horizontale Rohrabschnitte zur Überwindung des Abstandes verfügt, wobei die Lage der Anschlüsse des Heizkessels selbstverständlich maßgebend für die Rohrführung der Rohrabschnitte 63, 64 ist. So ist in der Fig. 10 beispielsweise die Besonderheit dargestellt, dass bei einer Übereinstimmung des horizontalen Abstandes der Kesselanschlussstutzen 32 mit dem horizontalen Abstand der Anschlüsse von Sammler 3 und Verteiler 4 der unerlässliche horizontale Verlauf der Rohrabschnitte 63, 64 vollständig durch die Rohrleitungen des Kessels 2 gebildet werden können.

Der Kesselvorlauf-Sammler 3 ist in der gewählten Darstellung der Fig. 8 im Vordergrund, wobei der Kesselrücklauf-Verteiler 4 von diesem im Hintergrund verdeckt ist. Von daher sind lediglich die Rohrabschnitte 63 sichtbar, wobei die Rohrabschnitte 64 von diesen verdeckt sind. Die Rohrabschnitte 63 bzw. 64 verlaufen vertikal von dem Sammler 3 bzw. von dem Verteiler 4 zum Kessel 2 und sind einerseits mit dem Sammler 3 bzw. dem Verteiler 4 und andererseits mit dem Kessel 2 über die Anschlussstutzen 32 bzw. 42 hydraulisch und mechanisch verbunden. Im Unterschied zu den Ausführungsbeispielen gemäß den Figuren 1 bis 7 weisen die jeweiligen Rohrabschnitte 63 bzw. 64 keine mechanische Verbindung zu dem jeweils nicht zugeordneten Sammler 3 bzw. Verteiler 4 auf.

An ihrem in Figur 8 rechten Stirnende sind der Sammler 3 und der Verteiler 4 mit der vertikal ausgerichteten hydraulischen Weiche 5 verbunden. Der Verteiler 4 mündet an der rechten Zeichnungsseite direkt in die hydraulische Weiche 5, wofür geeignete Verbindungsmittel einsetzbar sind. Der Verteiler 4 ist hydraulisch und mechanisch mit der hydraulischen Weiche 5 verbunden.

Dem Sammler 3 ist ein Bypass 630 zugeordnet, der zwei Leitungsabschnitte 631 und 632 aufweist. Der Leitungsabschnitt 631 verläuft in Horizontalrichtung von dem Sammler 3 in Richtung zum Verteiler 4, und geht in einen vertikalen Leitungsabschnitt 632 über, der mit der hydraulischen Weiche 5 in ihrem oberen Endbereich verbunden ist. Der vertikale Leitungsabschnitt 632 verläuft parallel zur hydraulischen Weiche 5. Der horizontale Leitungsabschnitt 631 ist hydraulisch und mechanisch mit dem Sammler 3 verbunden, wobei zur Abstützung des zum Verteiler 4 weisenden Endes des horizontalen Leitungsabschnittes 631 eine mechanische Verbindung mit dem Verteiler 4 gewählt werden kann. Somit ist der Sammler 3 hydraulisch mit der hydraulischen Weiche 5 verbunden.

Unterhalb des Sammler 3 und des Verteilers 4 sind in dem dargestellten Ausführungsbeispiel drei Querträger 11 angeordnet. Die Querträger 11 verlaufen in Horizontalrichtung und tragen unterseitig jeweils zwei Laufrollen 13, von denen in Figur 8 jeweils eine verdeckt ist.

Mittels dieser Laufrollen 13 kann die komplette Kaskadeneinheit 1 einschließlich der Kessel 2 ohne den Einsatz von Hub- oder Transportgeräten durch Muskelkraft rollend bewegt werden. Nach dem Verbringen der Kaskadeneinheit 1 an ihren Aufstellungsort können die Laufrollen 13 von dem Tragrahmen 10 getrennt und durch feste Boden- oder Wandkonsolen ersetzt werden.

In dem dargestellten Ausführungsbeispiel sind der Kaskadeneinheit 1 zwei Kessel 2 zugeordnet, die auf Kesselhalteelementen 12 gelagert sind. Die Kessel 2 sind in Längsrichtung der Kaskadeneinheit 1 zueinander beabstandet, und mittels geeigneter Anschlüsse 81 an eine Gasleitung 82 angeschlossen. Die Gasleitung 82 verläuft in dem dargestellten Ausführungsbeispiel oberhalb der Kaskadeneinheit 1.

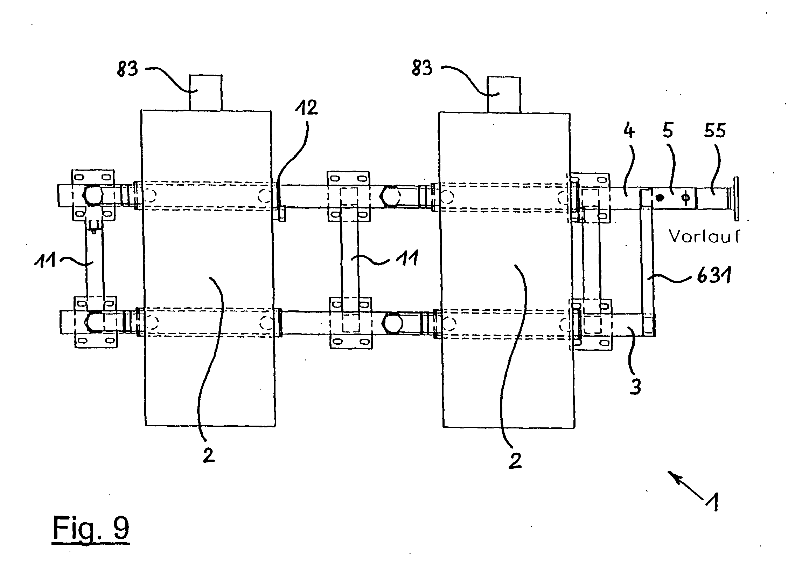

Die Kesselhalteelemente 12 sind als U-förmige Träger ausgeführt, die mit ihrem Basisschenkel in Längsrichtung auf dem zugeordneten Sammler 3 bzw. Verteiler 4 aufliegen bzw. mit diesem verbunden sind (Figur 9). Von dem Basissteg erstrecken sich U-Schenkel des Haltelementes 12 von dem jeweils zugeordneten Sammler 3 bzw. Verteiler 4 senkrecht in Richtung nach oben weg. Die Halteelemente 12 sind etwas breiter als der Kessel 2, so daß die U-Schenkel in Längsrichtung der Kaskadeneinheit 1 zu dem jeweils zugeordneten Kessel 2 beabstandet sind. In dem dargestellten Ausführungsbeispiel werden für einen Kessel 2 jeweils zwei separate Haltelemente 12 verwendet, die zueinander entsprechend dem horizontalen Abstand des Sammlers 3 zum Verteiler 4, abzüglich eines seitlichen Überstandes über den Sammler 3 bzw. Verteiler 4, beabstandet sind. Natürlich könnte für jeden Kessel 2 auch ein einstückiges Halteelement 12 eingesetzt werden, welches den Freiraum zwischen dem Sammler 3 und Verteiler 4 überspannt und jeweils seitlich den Sammler 3 bzw. den Verteiler 4 etwas überragt.

Zusätzlich kann die Kaskadeneinheit 1 in dem in Figur 8 dargestellten Beispiel noch mehrere Entlüftungsarmaturen 72 umfassen, um den Sammler 3, den Verteiler 4 und die hydraulische Weiche 5 automatisch oder manuell entlüften zu können. Auf der Oberseite der hydraulischen Weiche 5 ist der Fühler 73 angeordnet, beispielsweise ein in der Tauchhülse angeordnetes Thermometer. Am unteren Ende der hydraulischen Weiche 5 ist schließlich am tiefsten von Wasser durchströmten Teil der Kaskadeneinheit 1 noch der Entleerungsstutzen 75 angebracht, durch den bei Bedarf die Kaskadeneinheit 1 entleert werden kann. Außerdem kann der Stutzen 75 zum Abziehen von Schlamm genutzt werden, der sich im unteren Teil der hydraulischen Weiche 5 absetzt.

Figur 9 zeigt die Kaskadeneinheit 1 aus Figur 8 in einer Draufsicht. Deutlich erkennbar sind die horizontal beabstandeten Sammler 3 und Verteiler 4, sowie die darunter angeordneten Querträger 11. Außerdem sind die Kessel 2 über die Kesselhalteelemente 12 mechanisch mit dem Tragrahmen 10 verbunden, wobei die jeweiligen Haltelemente 12 den Sammler 3 bzw. Verteiler 4 seitlich etwas überragen, was mittels der gestrichelten Linien dargestellt ist. Die Kessel 2 sind vorteilhaft aufstehend auf der Kaskadeneinheit 1 stehend angeordnet.

Die hydraulische Weiche 5 ist rechts oben in Figur 9 im Anschluß an das hier rechte Stirnende des Verteilers 4 in Draufsicht erkennbar. Auch der Verlauf des horizontalen Leitungsabschnittes 631 von dem Sammler 3 in Richtung zum Verteiler 4 ist sichtbar. Nach rechts hin erstreckt sich von der hydraulischen Weiche 5 der Heizkreisvorlaufanschluß 55; darunter liegt verdeckt der Heizkreisrücklaufanschluß.

Figur 10 zeigt die Kaskadeneinheit 1 aus den Figuren 8 und 9 in einer Seitenansicht, also auf eine Seitenwand des bezogen auf die hydraulische Weiche 5 in Längsrichtung der Kaskadeneinheit 1 gesehen hintersten Kessels 2. In den Figuren 9 und 10 ist ein Abgasanschluss 83 des Kessels 2 sichtbar. Weiter sind die Rohrabschnitte 63 bzw. 64 in Figur 10 erkennbar, wobei der Rohrabschnitt 63 bzw. der Vorlaufanschluß des Kessels 2 an den Sammler 3 bezogen auf eine Mittelachse X an der rechten Seite und der Rohrabschnitt 64 bzw. der Rücklaufanschluß des Kessels 2 an den Verteiler 4 auf der dazu gegenüberliegenden linken Seite angeordnet ist. Weiter ist einer der Querträger 11 erkennbar, welcher die anderen Querträger verdeckt.

Von dem Sammler 3 ist der horizontale Leitungsabschnitt 631 in Richtung zum Verteiler 4 geführt. Der vertikale Leitungsabschnitt 632 ist in Figur 10 nicht dargestellt. Gestrichelt ist die hydraulische Weiche 5 dargestellt, da diese in der gewählten Ansicht durch den bzw. die Kessel 2 verdeckt im Hintergrund angeordnet ist. Unterhalb des horizontalen Leitungsabschnitts 631 bzw. des Verteilers 4 ist der Heizkreisrücklaufanschluß 56 erkennbar, wobei der Heizkreisvorlaufanschluß 55 verdeckt ist und deshalb gestrichelt dargestellt ist.

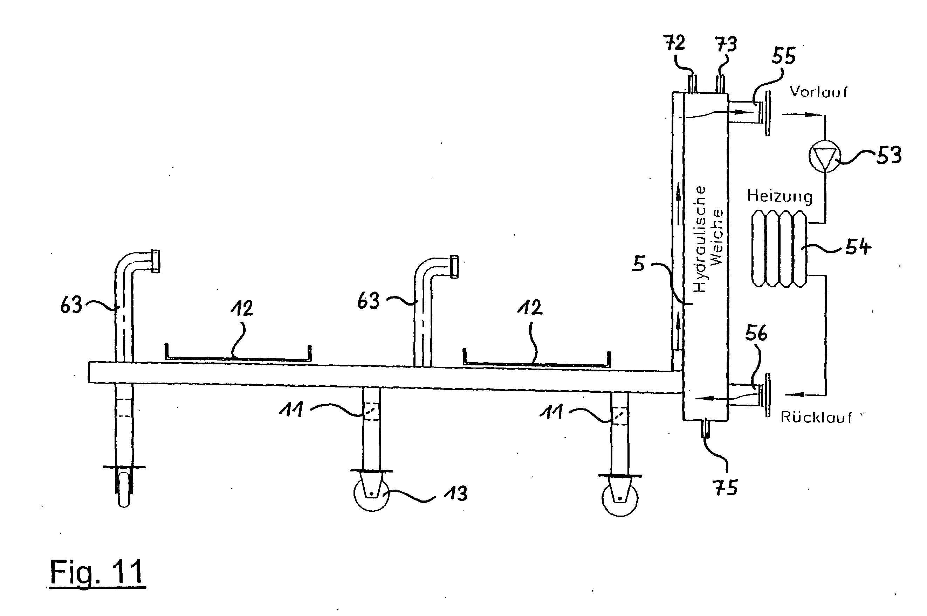

In Figur 11 ist die Kaskadeneinheit 1 ohne die montierten Kessel 2 dargestellt, wobei die Gasleitung 82 ebenfalls weggeschnitten wurde. Der Figur 11 sind aber beispielhaft die Entlüftungsarmatur 72, der Fühler 73 und der unten angeordnete Entleerungsstutzen 75 der hydraulischen Weiche 5 entnehmbar. Weiter ist prinzipiell der Anschluß des Heizkreises mit der möglichen Pumpe 53 und der beispielhaften Heizung 54 an die Anschlüsse 55 und 56 gezeigt.

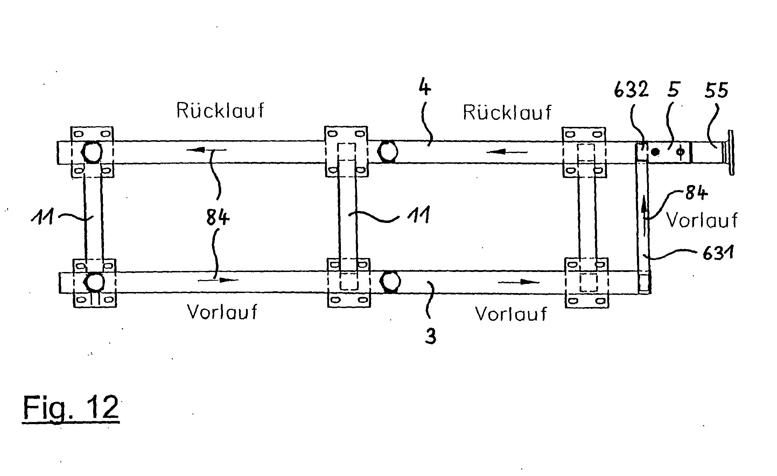

In Figur 12, welche im Prinzip der Figur 9, nur ohne Kessel 2, entspricht, ist beispielhaft die Strömung des Heizwasser in dem Sammler 3, dem Verteiler 4 und dem Bypass 630, insbesondere in seinem horizontalen Leitungsabschnitt 631, mittels der Pfeile 84 dargestellt.

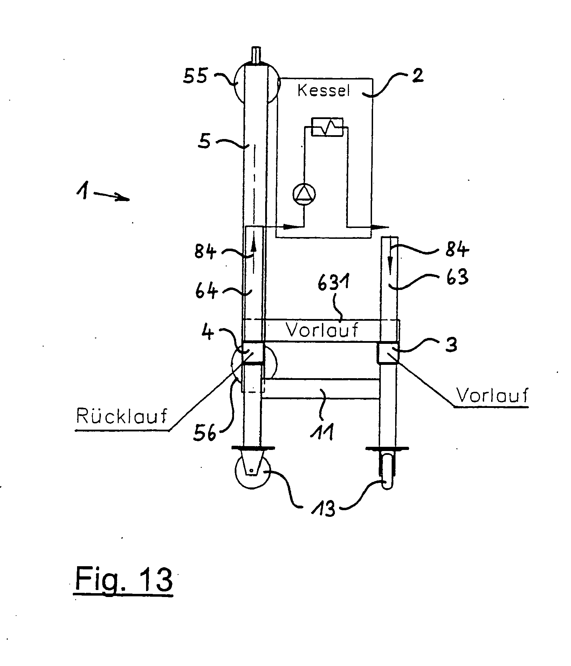

In der Figur 13 ist die Kaskadeneinheit 1 in einer Seitenansicht dargestellt, wobei die Strömung des Wassers in den Rohrleitungsabschnitten 63 bzw. 64 und durch den Kessel mittels der Pfeile 84 gezeigt ist. Die hydraulische Weiche 5 ist bezogen auf den Rohrleitungsabschnitt 64 hinter diesem angeordnet, wobei der Rohrleitungsabschnitt 64 etwas schmaler als die hydraulische Weiche 5 ist. Der rechts seitlich dazu angeordnete Rohrleitungsabschnitt 63 weist bevorzugt dieselbe Dimension auf wie der Rohrleitungsabschnitt 64. Die Strömung des Wassers aus dem Verteiler 4 über den Rohrleitungsabschnitt 64 durch den Kessel 2 über den Rohrleitungsabschnitt 63 in den Sammler 3 ist wiederum beispielhaft mittels der Pfeile 84 dargestellt.

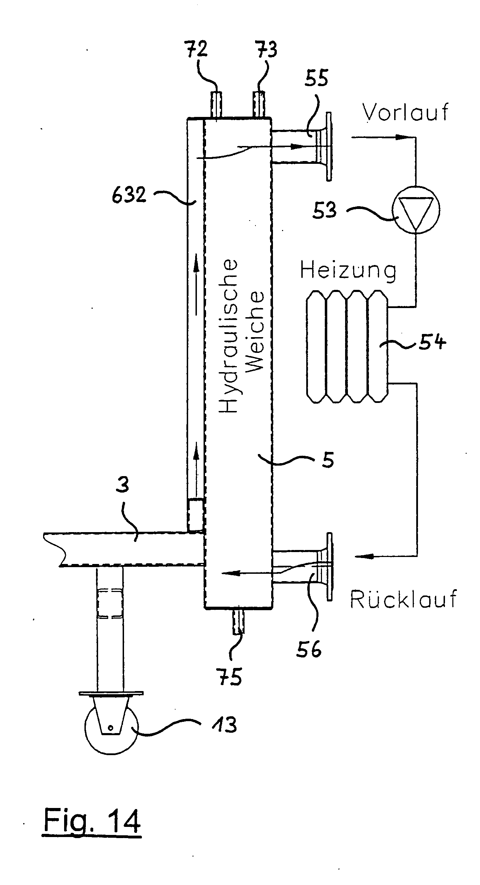

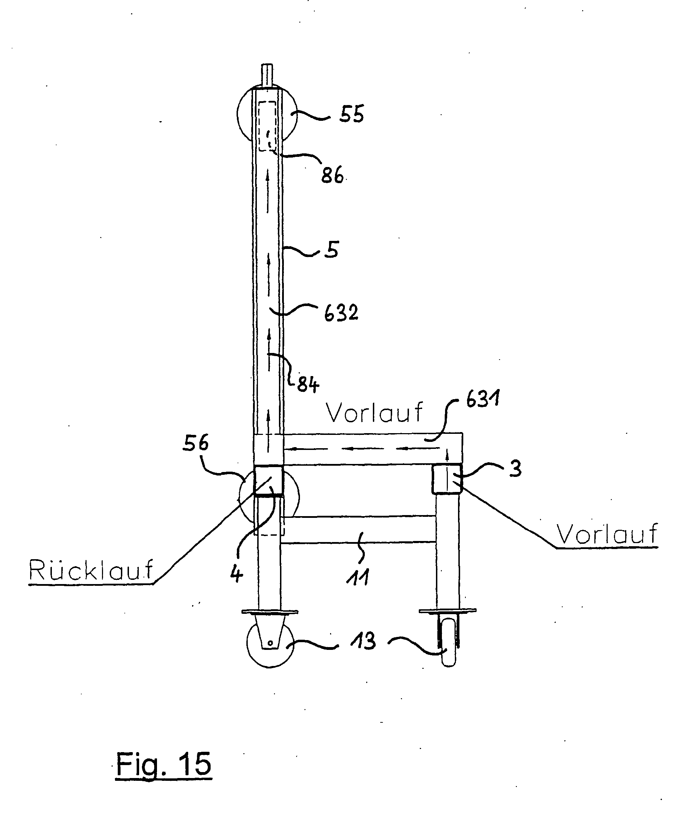

In der Figur 14 ist ein Teil der Kaskadeneinheit 1 mit der hydraulischen Weiche 5 vergrößert in einer Frontansicht abgebildet, wobei Figur 15 eine Seitenansicht zu Figur 14 zeigt.

Der Verteiler 4 mündet direkt in die hydraulische Weiche 5, wobei der horizontale Leitungsabschnitt 631 oberhalb der Verteilers 4 angeordnet ist und sich auf dem Verteiler 4 abstützend dargestellt ist. Der horizontale Leitungsabschnitt 631 kann hier mit dem Verteiler 4 verbunden, beispielsweise stoffschlüssig verbunden, vorzugsweise verschweißt, sein. Senkrecht zum horizontalen Leitungsabschnitt 631 erstreckt sich der vertikale Leitungsabschnitt 632 in Richtung zum oberen Endbereich der hydraulischen Weiche 5 und mündet hier in diese. Der vertikale Leitungsabschnitt 632 kann zur Lagesicherung in geeigneter Weise mit der hydraulischen Weiche 5 verbunden bzw. daran gehaltert sein.

In Figur 15 ist beispielhaft die Strömung des Wassers aus dem Sammler 3 durch den Bypass 630 mit seinen beiden Leitungsabschnitten 631 und 632 in die hydraulische Weiche 5 mittels der Pfeile 84 dargestellt, wobei eine Strömungsverbindung von dem vertikalen Leitungsabschnitt 632 in die hydraulische Weiche 5 beispielhaft mittels der gestrichelt dargestellten Ausnehmung 86 gezeigt ist. Der vertikale Leitungsabschnitt 632 ist etwas schmaler als die hydraulische Weiche 5.

## Patentansprüche

1. Kaskadeneinheit (1) für eine Heizungsanlage mit zwei oder mehr Heizkesseln (2), insbesondere Brennwertkesseln, mit einer hydraulischen Weiche (5), die einerseits mit den Vorläufen und Rückläufen aller Heizkessel (2) und andererseits mit mindestens je einem Heizkreisvorlauf (55) und Heizkreisrücklauf (56) verbindbar ist, wobei die Kaskadeneinheit (1) weiterhin je einen im wesentlichen horizontal verlaufenden Kesselvorlauf-Sammler (3) und Kesselrücklauf-Verteiler (4) umfaßt, wobei der Sammler (3) und der Verteiler (4) mit der hydraulischen Weiche (5) verbunden sind und wobei der Sammler (3) und der Verteiler (4) jeweils mit vorbereiteten, für eine Gruppe aus zwei oder mehr Heizkesseln (2) angepaßt plazierten Anschlußstutzen (32, 42) zum Anschluß der Heizkesselvorläufe und der Heizkesselrückläufe ausgeführt sind,
**dadurch gekennzeichnet,**
**daß** die Kaskadeneinheit (1) mindestens einen selbsttragenden Tragrahmen (10) bildet, an dem mindestens einer der Heizkessel (2) anbringbar ist.

2. Kaskadeneinheit nach Anspruch 1, **dadurch gekennzeichnet, daß** der Sammler (3) und der Verteiler (4) tragende Elemente des selbsttragenden Tragrahmens (10) sind.

3. Kaskadeneinheit nach Anspruch 1 oder 2, **dadurch gekennzeichnet, daß** der Sammler (3) und der Verteiler (4) in einer vertikalen Ebene mit Abstand zueinander angeordnet sind und daß zwischen dem Sammler (3) und dem Verteiler (4) vertikale Rohrabschnitte (63, 64) angeordnet sind, wobei die Rohrabschnitte (63, 64) entweder mit dem Sammler (3) oder mit dem Verteiler (4) hydraulisch verbunden und zumindest über Teilstrecken ihrer Länge wasserführend sind und die Anschlußstutzen (32, 42) zum Anschluß der Heizkesselvorläufe und der Heizkesselrückläufe aufweisen oder tragen.

4. Kaskadeneinheit nach Anspruch 1 oder 2, **dadurch gekennzeichnet, daß** der Sammler (3) und der Verteiler (4) in einer horizontalen Ebene mit Abstand zueinander angeordnet sind und daß zwischen dem Sammler (3) und dem Verteiler (4) horizontale Rohrabschnitte (63, 64) angeordnet sind, wobei die Rohrabschnitte (63, 64) entweder mit dem Sammler (3) oder mit dem Verteiler (4) hydraulisch verbunden und zumindest über Teilstrecken ihrer Länge wasserführend sind und die Anschlußstutzen (32, 42) zum Anschluß der Heizkesselvorläufe und der Heizkesselrückläufe aufweisen oder tragen.

5. Kaskadeneinheit nach Anspruch 3 oder 4, **dadurch gekennzeichnet, daß** der Sammler (3), der Verteiler (4) und die vertikalen oder horizontalen Rohrabschnitte (63, 64) als hydraulisch und statisch ausreichend bemessene Rund- oder Rechteckrohre aus Stahl ausgeführt sind.

6. Kaskadeneinheit nach einem der vorhergehenden Ansprüche, **dadurch gekennzeichnet, daß** der Sammler (3) und der Verteiler (4) jeweils an ihrem einen seitlichen Stirnende mit der im wesentlichen vertikal ausgerichteten hydraulischen Weiche (5) verbunden sind, wobei der Sammler (3) oben und der Verteiler (4) unten an die Weiche (5) anschließt.

7. Kaskadeneinheit nach Anspruch 6, **dadurch gekennzeichnet, daß** die hydraulische Weiche (5) fest mit dem Sammler (3) und dem Verteiler (4) verbunden ist und ein tragendes Element des selbsttragenden Tragrahmens (10) bildet.

8. Kaskadeneinheit nach Anspruch 6, **dadurch gekennzeichnet, daß** die hydraulische Weiche (5) lösbar mit dem Sammler (3) und dem Verteiler (4) verbunden ist und ein nichttragendes Element oder ein tragendes Element des selbsttragenden Tragrahmens (10) bildet.

9. Kaskadeneinheit nach einem der vorhergehenden Ansprüche, **dadurch gekennzeichnet, daß** sie mehrere selbsttragende Tragrahmen (10) umfaßt, die jeweils im Bereich der Stirnenden des Sammlers (3) und des Verteilers (4) miteinander mechanisch und hydraulisch lösbar verbunden sind.

10. Kaskadeneinheit nach Anspruch 9, **dadurch gekennzeichnet, daß** der Sammler (3) und der Verteiler (4) jeweils an einem oder an beiden Stirnenden mit je einem genormten Verbindungsmittel, vorzugsweise Verbindungsflansch (31, 41), ausgebildet sind.

11. Kaskadeneinheit nach einem der vorhergehenden Ansprüche, **dadurch gekennzeichnet, daß** der/jeder Tragrahmen (10) vorbereitete, an die zu halternden Kessel (2) angepaßte Kesselhalteelemente (12) aufweist.

12. Kaskadeneinheit nach einem der vorhergehenden Ansprüche, **dadurch gekennzeichnet, daß** der Tragrahmen (10) Halteelemente und/oder Anschlüsse für weitere Komponenten der Kaskadeneinheit (1), insbesondere für Ausdehnungsgefäße (71), Entlüftungsarmaturen (71), Fühler (73), Regelgeräte (74) und andere Armaturen und/oder Funktionselemente, aufweist.

13. Kaskadeneinheit nach einem der vorhergehenden Ansprüche, **dadurch gekennzeichnet, daß** an dem Tragrahmen (10) ein Leitungsabschnitt mit passend positionierten Abzweigen zu allen gehalterten Kesseln (2) zum Zuführen von gasförmigem oder flüssigem Brennstoff angeordnet ist.

14. Kaskadeneinheit nach einem der vorhergehenden Ansprüche, **dadurch gekennzeichnet, daß** an dem Tragrahmen (10) je ein Leitungsabschnitt mit passend positionierten Leitungszweigen von allen gehalterten Kesseln (2) zum Sammeln und Abführen von Abgasen und/oder zum Sammeln und Abführen von Kondensat angeordnet ist.

15. Kaskadeneinheit nach einem der vorhergehenden Ansprüche, **dadurch gekennzeichnet, daß** am Tragrahmen (10) unterseitig mehrere Laufrollen (13) angebracht sind.

16. Kaskadeneinheit nach Anspruch 15, **dadurch gekennzeichnet, daß** die Laufrollen (13) lösbar am Tragrahmen (10) angebracht und durch Stand- oder Wandkonsolen ersetzbar sind.

17. Kaskadeneinheit nach Anspruch 1 oder 2 oder nach einem der Ansprüche 4 bis 16, **dadurch gekennzeichnet, daß** der Sammler (3) und der Verteiler (4) in einer horizontalen Ebene mit Abstand zueinander angeordnet sind und daß von dem Sammler (3) und dem Verteiler (4) Rohrabschnitte (63, 64) vertikal zum Kessel (2) verlaufen, wobei die Rohrabschnitte (63, 64) mit dem jeweils zugeordneten Sammler (3) oder Verteiler (4) mechanisch und hydraulisch verbunden sind und wobei die Rohrabschnitte (63, 64) Anschlußstutzen (32, 42) zum Anschluß an den Kessel (2) aufweisen.

18. Kaskadeneinheit nach Anspruch 17, **dadurch gekennzeichnet, daß** dem Sammler (3) ein Bypass (630) zugeordnet ist, der einen horizontalen Leitungsabschnitt (631) und einen vertikalen Leitungsabschnitt (632) aufweist.

19. Kaskadeneinheit nach Anspruch 18, **dadurch gekennzeichnet, daß** der Verteiler (4) hydraulisch und mechanisch mit der hydraulischen Weiche (5) verbunden ist und daß der Sammler (3) über den Bypass (630) hydraulisch mit der hydraulischen Weiche (5) verbunden ist.

## Claims

1. A cascade unit (1) for a heating system with two or more heating boilers (2), in particular condensing boilers, with a hydraulic shunt (5) which is connectable on the one hand with the inlet flows and return flows of all heating boilers (2) and on the other hand with at least one heating circuit inlet flow (55) and heating circuit return flow (56) each, with the cascade unit (1) furthermore comprising one each of the essentially horizontally extending boiler inlet flow header (3) and boiler return flow manifold (4), the header (3) and the manifold (4) being connected with the hydraulic shunt (5), and the header (3) and the manifold (4) each being designed with prepared connecting nozzles (32, 42) fittingly placed for a group of two or more heating boilers (2) for the connection of the heating boiler inlet flows and the heating boiler return flows,
**characterized in that**
the cascade unit (1) forms at least one self-supporting support frame (10) on which at least one of the heating boilers (2) is mountable.

2. A cascade unit according to claim 1, **characterized in that** the header (3) and the manifold (4) are bearing elements of the self-supporting support frame (10).

3. A cascade unit according to claim 1 or 2, **characterized in that** the header (3) and the manifold (4) are arranged at a distance to each other in a vertical plane and that vertical pipe sections (63, 64) are provided between the header (3) and the manifold (4), with the pipe sections (63, 64) being hydraulically connected either with the header (3) or with the manifold (4) and carrying water at least over partial sections of their length and comprising or bearing connecting nozzles (32, 42) for the connection of the heating boiler inlet flows and the heating boiler return flows.

4. A cascade unit according to claim 1 or 2, **characterized in that** the header (3) and the manifold (4) are arranged in a horizontal plane at a distance to each other and that horizontal pipe sections (63, 64) are provided between the header (3) and the manifold (4), with the pipe sections (63, 64) being hydraulically connected either with the header (3) or with the manifold (4) and carrying water at least over partial sections of their length and comprising or bearing the connecting nozzles (32, 42) for the connection of the heating boiler inlet flows and the heating boiler return flows.

5. A cascade unit according to claim 3 or 4, **characterized in that** the header (3), the manifold (4) and the vertical or horizontal pipe sections (63, 64) are designed as hydraulically and statically adequately dimensioned round or square steel pipes.

6. A cascade unit according to any one of the preceding claims, **characterized in that** the header (3) and the manifold (4) are each connected on their one lateral face end with the essentially vertically oriented hydraulic shunt (5), with the header (3) connecting to the shunt (5) on the top and the manifold (4) on the bottom.

7. A cascade unit according to claim 6, **characterized in that** the hydraulic shunt (5) is firmly connected with the header (3) and the manifold (4) and forms a bearing element of the self-supporting support frame (10).

8. A cascade unit according to claim 6, **characterized in that** the hydraulic shunt (5) is detachably connected with the header (3) and the manifold (4) and forms a non-bearing element or a bearing element of the self-supporting support frame (10).

9. A cascade unit according to any one of the preceding claims, **characterized in that** it comprises several self-supporting support frames (10) which are each mechanically and hydraulically detachably connected in the area of the face ends of the header (3) and the manifold (4).

10. A cascade unit according to claim 9, **characterized in that** the header (3) and the manifold (4) are each formed on one or on both face ends with one standardized connecting means each, preferably a connecting flange (31, 41).

11. A cascade unit according to any one of the preceding claims, **characterized in that** the/each support frame (10) comprises prepared boiler mounting elements (12) adjusted to the boilers (2) to be mounted.

12. A cascade unit according to any one of the preceding claims, **characterized in that** the support frame (10) comprises mounting elements and/or connections for other components of the cascade unit (1), in particular for expansion vessels (71), vent fittings (72), sensors (73), control devices (74) and other fittings and/or functional elements.

13. A cascade unit according to any one of the preceding claims, **characterized in that** a line section with suitably positioned branches to all mounted boilers (2) is arranged on the support frame (10) for the supply of gaseous or liquid fuel.

14. A cascade unit according to any one of the preceding claims, **characterized in that**, on the support frame (10), one line section each is arranged with suitably positioned line branches from all mounted boilers (2) for the collection and removal of waste gases and/or the collection and removal of condensate.

15. A cascade unit according to any one of the preceding claims, **characterized in that** several castors (13) are provided on the underside of the support frame (10).

16. A cascade unit according to claim 15, **characterized in that** the castors (13) are detachably mounted on the support frame (10) and can be replaced by floor or wall brackets.

17. A cascade unit according to claim 1 or 2 or according to any one of the claims 4 to 16, **characterized in that** the header (3) and the manifold (4) are arranged in a horizontal plane at a distance to each other and that pipe sections (63, 64) extend vertically from the header (3) and the manifold (4) to the boiler (2), with the pipe sections (63, 64) being mechanically and hydraulically connected with the respectively allocated header (3) or manifold (4) and with the pipe sections (63, 64) having connecting nozzles (32, 42) for connection to the boiler (2).

18. A cascade unit according to claim 17, **characterized in that** the header (3) is provided with a bypass (630) which comprises a horizontal line section (631) and a vertical line section (632).

19. A cascade unit according to claim 18, **characterized in that** the manifold (4) is hydraulically and mechanically connected with the hydraulic shunt (5) and that the header (3) is hydraulically connected with the hydraulic shunt (5) via the bypass (630).

## Revendications

1. Ensemble en cascade (1) pour une installation de chauffage avec deux chaudières (2) ou plus, en particulier des chaudières à condensation, avec un séparateur hydraulique (5) qui peut être relié d'un côté aux canalisations de départ et aux canalisations de retour de toutes les chaudières (2) et, d'un autre côté, à au moins respectivement un départ du circuit de chauffage (55) et un retour du circuit de chauffage (56), sachant que l'ensemble en cascade (1) comprend en outre respectivement un collecteur de départ de chaudière (3) et un distributeur de retour de chaudière (4) s'étendant essentiellement à l'horizontale, que le collecteur (3) et le distributeur (4) sont reliés au séparateur hydraulique (5), et que le collecteur (3) et le distributeur (4) sont respectivement conçus avec des embouts de raccordement préparés (32, 42) placés de manière adaptée pour un groupe de deux chaudières (2) ou plus, pour le raccordement des départs et des retours de chaudière,
**caractérisé en ce que**
l'ensemble en cascade (1) forme au moins un cadre porteur autoportant (10) sur lequel peut être fixée au moins une des chaudières (2).

2. Ensemble en cascade selon la revendication 1, **caractérisé en ce que** le collecteur (3) et le distributeur (4) sont des éléments porteurs du cadre porteur autoportant (10).

3. Ensemble en cascade selon la revendication 1 ou 2, **caractérisé en ce que** le collecteur (3) et le distributeur (4) sont disposés sur un plan vertical à distance l'un de l'autre, et que des sections tubulaires verticales (63, 64) sont disposées entre le collecteur (3) et le distributeur (4), sachant que les sections tubulaires (63, 64) sont reliées hydrauliquement soit au collecteur (3), soit au distributeur (4), sont aquifères au moins sur certains tronçons de leur longueur, et présentent ou portent les embouts de raccordement (32, 42) permettant de raccorder les départs et les retours de chaudière.

4. Ensemble en cascade selon la revendication 1 ou 2, **caractérisé en ce que** le collecteur (3) et le distributeur (4) sont disposés sur un plan horizontal à distance l'un de l'autre, et que des sections tubulaires horizontales (63, 64) sont disposées entre le collecteur (3) et le distributeur (4), sachant que les sections tubulaires (63, 64) sont reliées hydrauliquement soit au collecteur (3), soit au distributeur (4), sont aquifères au moins sur certains tronçons de leur longueur, et présentent ou portent les embouts de raccordement (32, 42) permettant de raccorder les départs et les retours de chaudière.

5. Ensemble en cascade selon la revendication 3 ou 4, **caractérisé en ce que** le collecteur (3), le distributeur (4) et les sections tubulaires verticales ou horizontales (63, 64) sont conçus sous forme de tubes ronds ou rectangulaires en acier de dimension hydrauliquement et statiquement suffisante.

6. Ensemble en cascade selon l'une des revendications précédentes, **caractérisé en ce que** le collecteur (3) et le distributeur (4) sont reliés respectivement par l'une de leur extrémité frontale latérale au séparateur hydraulique (5) orienté essentiellement à la verticale, sachant que le collecteur (3) est raccordé en haut au séparateur (5), et le distributeur (4) en bas.

7. Ensemble en cascade selon la revendication 6, **caractérisé en ce que** le séparateur hydraulique (5) est relié de manière fixe au collecteur (3) et au distributeur (4), et forme un élément porteur du cadre porteur autoportant (10).

8. Ensemble en cascade selon la revendication 6, **caractérisé en ce que** le séparateur hydraulique (5) est relié de manière amovible au collecteur (3) et au distributeur (4), et forme un élément non porteur ou un élément porteur du cadre porteur autoportant (10).

9. Ensemble en cascade selon l'une des revendications précédentes, **caractérisé en ce qu'**il comprend plusieurs cadres porteurs autoportants (10) qui sont hydrauliquement et mécaniquement reliés entre eux de manière amovible, respectivement dans la zone des extrémités frontales du collecteur (3) et du distributeur (4).

10. Ensemble en cascade selon la revendication 9, **caractérisé en ce que** le collecteur (3) et le distributeur (4) sont pourvus respectivement d'un moyen de fixation normé, de préférence d'une bride d'assemblage (31, 41), sur une de leurs extrémités frontales respectives ou sur les deux.

11. Ensemble en cascade selon l'une des revendications précédentes, **caractérisé en ce que** le/chaque cadre porteur (10) présente des éléments de fixation de chaudière (12) préparés et adaptés à la chaudière (2) à fixer.

12. Ensemble en cascade selon l'une des revendications précédentes, **caractérisé en ce que** le cadre porteur (10) présente des éléments de fixation et/ou de raccordement pour d'autres composants de l'ensemble en cascade (1), en particulier pour des vases d'expansion (71), des robinets de purge (72), des sondes (73), des appareils de régulation (74) et autres robinets et/ou éléments fonctionnels.

13. Ensemble en cascade selon l'une des revendications précédentes, **caractérisé en ce qu'**est disposé, sur le cadre porteur (10), un tronçon de conduite avec des embranchements positionnés de manière adaptée vers toutes les chaudières (2) fixées, pour l'alimentation en combustible gazeux ou liquide.

14. Ensemble en cascade selon l'une des revendications précédentes, **caractérisé en ce qu'**est disposé, sur le cadre porteur (10), respectivement un tronçon de conduite avec des branches de conduite de chacune des chaudières fixées (2), pour la collecte et l'évacuation de gaz brûlés et/ou pour la collecte et l'évacuation de condensat.

15. Ensemble en cascade selon l'une des revendications précédentes, **caractérisé en ce que** plusieurs galets de roulement (13) sont fixés sur la face inférieure sur le cadre porteur (10).

16. Ensemble en cascade selon la revendication 15, **caractérisé en ce que** les galets de roulement (13) sont fixés de manière amovible sur le cadre porteur (10) et peuvent être remplacés par des consoles murales ou sur pied.

17. Ensemble en cascade selon la revendication 1 ou 2 ou selon l'une des revendications 4 à 16, **caractérisé en ce que** le collecteur (3) et le distributeur (4) sont disposés sur un plan horizontal à distance l'un de l'autre, et que des sections tubulaires (63, 64) s'étendent verticalement à la chaudière (2) à partir du collecteur (3) et du distributeur (4), sachant que les sections tubulaires (63, 64) sont reliées mécaniquement et hydrauliquement au collecteur (3) ou distributeur (4) respectivement assigné, et que les sections tubulaires (63, 64) présentent des embouts de raccordement (32, 42) pour le raccordement à la chaudière (2).

18. Ensemble en cascade selon la revendication 17, **caractérisé en ce qu'**une conduite de dérivation (630) est attribuée au collecteur (3), laquelle présente un tronçon de conduite horizontal (631) et un tronçon de conduite vertical (632).

19. Ensemble en cascade selon la revendication 18, **caractérisé en ce que** le distributeur (4) est relié hydrauliquement et mécaniquement au séparateur hydraulique (5), et que le collecteur (3) est relié hydrauliquement au séparateur hydraulique (5) par l'intermédiaire de la conduite de dérivation (630).
